(19) Europäisches Patentamt
European Patent Office
Office européen des brevets

(11) EP 0 760 868 B1

(12) # FASCICULE DE BREVET EUROPEEN

(45) Date de publication et mention de la délivrance du brevet:
**07.08.2002 Bulletin 2002/32**

(21) Numéro de dépôt: **96906801.4**

(22) Date de dépôt: **08.03.1996**

(51) Int Cl.[7]: **C21C 5/52**, F27B 3/22

(86) Numéro de dépôt international:
**PCT/FR96/00365**

(87) Numéro de publication internationale:
**WO 96/28573 (19.09.1996 Gazette 1996/42)**

(54) **PROCEDE D'ELABORATION DE L'ACIER DANS UN FOUR ELECTRIQUE A ARC, ET FOUR ELECTRIQUE A ARC POUR SA MISE EN OEUVRE**

VERFAHREN UND VORRICHTUNG ZUR HERSTELLUNG VON STAHL IN EINEM ELEKTRO-LICHTBOGENOFEN

METHOD FOR PRODUCING STEEL IN AN ELECTRIC ARC FURNACE, AND ELECTRIC ARC FURNACE THEREFOR

(84) Etats contractants désignés:
**AT BE CH DE DK ES FI FR GB GR IE IT LI LU NL PT SE**

(30) Priorité: **14.03.1995 FR 9502918**

(43) Date de publication de la demande:
**12.03.1997 Bulletin 1997/11**

(73) Titulaire: **USINOR**
**92800 Puteaux (FR)**

(72) Inventeurs:
- **BERNET, Thierry**
  **98800-Noumea (NC)**
- **DESTANNES, Philippe**
  **F-57000 Metz (FR)**
- **ROTH, Jean-Luc**
  **F-57000 Metz (FR)**

(74) Mandataire: **Ventavoli, Roger**
**TECHMETAL PROMOTION (Groupe USINOR),**
**Immeuble " La Pacific "**
**11/13 Cours Valmy**
**La Défense 7,**
**TSA 10001**
**92070 Paris La Défense Cédex (FR)**

(56) Documents cités:
**EP-A- 0 257 450**
**EP-A- 0 630 977**
**US-A- 4 730 336**
**US-A- 5 112 387**
**US-A- 5 375 139**

- **PATENT ABSTRACTS OF JAPAN vol. 95, no. 4, 31 Mai 1995 & JP,A,07 026318 (KAWASAKI STEEL CORP.), 27 Janvier 1995,**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 760 868 B1

## Description

L'invention concerne l'élaboration de l'acier dans les fours électriques à arc. Plus précisément, elle concerne le mode d'injection dans l'enceinte du four de l'oxygène gazeux qui a pour fonction d'accélerer la fusion des ferrailles et de réaliser la combustion complète des gaz carbonés issus du bain de métal liquide.

Les fours électriques à arc d'aciérie servent à effectuer la fusion des matières premières ferrifères (ferrailles, fonte ou minerai de fer préréduit) destinées à former le bain d'acier liquide, ainsi qu'au moins les premières étapes du réglage de la composition de cet acier liquide préalablement à sa coulée. Dans le cas des fours alimentés en courant alternatif, l'apport d'énergie nécessaire à la fusion puis au réglage de la température de la charge métallique est majoritairement réalisé par un arc électrique établi entre le bain et trois électrodes en graphite qui traversent la voûte coiffant la cuve du four, et sont disposées au-dessus du bain. Dans le cas des fours alimentés en courant continu, le courant circule entre au moins une électrode de voûte en graphite et au moins une électrode implantée dans la sole du four et mise au contact du bain.

Actuellement, on tend de plus en plus à substituer à une partie de cet apport d'énergie électrique, ou à lui ajouter, un apport d'énergie fossile, fondé sur la combustion par de l'oxygène gazeux du carbone contenu initialement dans la charge solide, voire également de matières carbonées ajoutées délibérément à la charge solide et/ou au bain liquide. Il est également connu d'assurer un chalumage des ferrailles au moyen de brûleurs à oxygène, au fioul ou au gaz naturel. Au total, cet apport d'énergie fossile peut constituer de 25 à 50 % de l'énergie potentielle totale introduite lors de la fusion et de l'élaboration de la charge.

Les réactions successives de combustion complète du carbone grâce auxquelles l'apport énergétique par l'oxygène est réalisé s'écrivent:

$$\underset{25°C}{C} + \underset{25°C}{\tfrac{1}{2} O_2} \rightarrow \underset{1600°C}{CO}$$

ΔH = 1,35 kWh/kg de carbone et

$$\underset{1600\ °C}{CO} + \underset{25\ °C}{\tfrac{1}{2} O_2} \rightarrow \underset{1600\ °C}{CO_2}$$

ΔH = 6 kWh/kg de carbone

C'est clairement la réaction d'oxydation du CO en $CO_2$, que l'on désigne habituellement par le terme "post-combustion du CO", qui représenterait l'apport énergétique le plus intéressant pour la charge métallique. Mais, dans la pratique, il n'y a bien souvent qu'une faible partie du carbone disponible qui est brûlée complètement en $CO_2$ au voisinage immédiat du métal solide ou liquide. La décarburation de l'acier liquide, qu'elle se produise naturellement ou soit consécutive à l'insufflation d'oxygène dans'le bain métallique, forme du CO qui à sa sortie du bain ne trouve pas de conditions suffisamment favorables à son oxydation totale en $CO_2$. En fait, cette oxydation ne se produit significativement que dans la partie supérieure du four, lorsque le CO entre en contact avec l'air qui pénétre dans le four de manière incontrôlée par les ouvertures du four et par les interstices séparant la voûte et le bord supérieur de la cuve sur lequel elle repose. La zone préférentielle de post-combustion du CO est donc trop éloignée de la charge métallique et la température de combustion est trop faible pour que cette post-combustion contribue de manière très significative au chauffage des ferrailles en cours de fusion ou du bain de métal liquide.

On a imaginé (voir le document EP0257450 ) d'implanter des lances à oxygène dans la paroi latérale du four (au-dessus du niveau du bain liquide), afin d'accentuer le phénomène de post-combustion du CO en $CO_2$. Ces lances sont inclinées d'un angle de 30 à 60° par rapport à la verticale, et orientent leurs jets tangentiellement à un cylindre imaginaire défini soit par l'électrode elle-même dans le cas où le four est un four mono-électrode, soit par le cylindre dans lequel s'inscrivent les électrodes dans le cas d'un four à trois électrodes. Elles visent les zones du four qui sont habituellement relativement les plus froides et où la fusion des ferrailles est la plus lente. L'expérience montre, cependant, que l'efficacité d'un tel équipement n'est pas encore optimale.

Le but de l'invention est de proposer une méthode efficace pour réaliser une post-combustion aussi complète que possible du CO produit dans le four en $CO_2$, et de faire en sorte que la chaleur produite par cette post-combustion soit exploitée au mieux pour le réchauffage du bain de métal liquide.

A cet effet, l'invention a pour objet un procédé d'élaboration de l'acier dans un four électrique à arc du type comportant une cuve renfermant un bain d'acier en fusion, une voûte coiffant ladite cuve et une électrode de voûte unique ou une pluralité d'électrodes de voûte inscrites dans un cylindre, selon lequel on insuffle un gaz oxygéné sous forme de jets gazeux dans ladite cuve en direction de la surface dudit bain, de manière à ce que les zones d'impact desdits jets sur ladite surface ne recouvrent pas ladite électrode ou ledit cylindre, caractérisé en ce que lesdits jets sont insufflés à partir de la partie supérieure du four, et en ce qu'ils ont une faible profondeur de pénétration dans ledit bain.

L'invention a également pour objet un four électrique à arc d'aciérie, du type comportant une cuve destinée à renfermer l'acier en fusion, une voûte coiffant ladite cuve, une électrode de voûte unique ou une pluralité d'électrodes de voûte inscrites dans un cylindre, et des moyens pour insuffler des jets d'un gaz oxygéné dans ladite cuve en direction de la surface dudit acier, les zones d'impact desdits jets sur ladite surface ne recouvrant pas ladite électrode ou ledit cylindre, caractérisé en ce que lesdits moyens sont constitués par des tuyères implantées dans ladite voûte. Les objets the l'invention sont realisés pour les charactéristiques selon les revendications 1 et 4.

Comme on l'aura compris, l'invention consiste à réaliser une post-combustion du CO produit dans le four au moyen d'une multiplicité de jets d'oxygène envoyés sur les matières ferrifères en cours de fusion ou déjà fondues, mais en veillant à ce que ces jets ne provoquent pas une combustion des électrodes en graphite, et ne pénètrent pas trop profondément dans le bain de métal liquide, pour des raisons qui seront explicitées plus loin.

L'invention sera mieux comprise à la lecture de la description qui suit, donnée en référence aux figures annexées suivantes:

- la figure 1 qui représente schématiquement vue de dessus la cuve d'un four électrique d'aciérie permettant de mettre en oeuvre l'invention;
- la figure 2 qui représente schématiquement le même four électrique vu de face et en coupe selon II-II.

Le four électrique à arc d'aciérie schématisé sur les figures 1 et 2 comporte classiquement une cuve 1, dont la paroi latérale est équipée de panneaux 1' refroidis à l'eau, et dont la partie inférieure est revêtue intérieurement de réfractaires 1". C'est cette partie inférieure qui renferme l'acier en cours d'élaboration, représenté pour partie formant un bain 2 complètement liquide, et pour le reste sous forme de ferrailles 2' non encore fondues. La cuve 1 est coiffée d'une voûte 3 que traversent, dans l'exemple décrit, trois électrodes en graphite 4, 5, 6 connectées à une alimentation électrique non représentée. La cuve 1 comporte également, de manière classique, une porte de décrassage 7 par laquelle on peut évacuer périodiquement le laitier (non représenté) surmontant l'acier liquide 2, et un bec de coulée 8 (non représenté sur la figure 2) par lequel a lieu la coulée de l'acier liquide 2 hors du four.

Afin de mettre en oeuvre le procédé selon l'invention, trois tuyères 9, 10, 11 d'insufflation d'oxygène sont implantées dans la voûte 3. Les jets d'oxygène 12, 13, 14 qui en sont issus, et dont les contours sont dessinés en pointillés, sont orientés de haut en bas en direction de la surface du bain d'acier liquide 2. Pour que cette mise en oeuvre ait une efficacité maximale, les impacts 15, 16, 17 des jets sur le bain 2, dont les limites sont schématisées en pointillés sur la figure 1, doivent recouvrir la plus grande fraction possible de la surface du bain 2. On vise ainsi à oxyder en $CO_2$ à proximité immédiate du métal liquide 2 la majeure partie du CO s'en échappe, et à optimiser ainsi le transfert au métal liquide 2 ou solide 2' de l'énergie thermique dégagée par cette oxydation. Il est cependant nécessaire que ces impacts 15, 16, 17 ne recouvrent pas le cercle 18 dans lequel sont inscrites les trois électrodes 4, 5, 6, afin de ne pas provoquer une combustion excessive des électrodes 4, 5, 6. Dans le cas d'un four mono-électrode, les impacts 15, 16, 17 doivent être tenus à l'écart de l'électrode elle-même, pour des raisons identiques. De même, il est préférable que les jets d'oxygène 12, 13, 14 ne viennent pas percuter les parois réfractaires du four 1, afin de ne pas les user exagérément et inutilement.

Une autre condition fondamentale pour l'obtention d'une combustion secondaire du CO satisfaisante est que les jets 12, 13, 14 ne doivent pas percuter le bain 2 de manière trop violente. Si cela se produisait, l'oxygène pénètrerait profondément dans l'acier liquide 2 et contribuerait à sa décarburation par formation de CO, alors que ce n'est pas son rôle (à cet effet, on injecte souvent de l'oxygène directement dans le bain 2 par des lances immergées ou des tuyères intégrées à la sole de la cuve 1). Le rendement de la post-combustion s'en trouverait détérioré. D'autre part, la pénétration des jets d'oxygène 12, 13, 14 dans le bain 2 génère des projections de gouttelettes d'acier liquide 19. Ces gouttelettes métalliques peuvent réduire le $CO_2$ en CO. Cette réaction est endothermique, et les inventeurs se sont aperçu que cet effet contribuait à annihiler partiellement et sensiblement l'effet de la post-combustion. Ces projections sont d'autant plus intenses que la profondeur de pénétration des jets d'oxygène dans l'acier liquide 2 est grande, et il est donc très important que les jets d'oxygène insufflés par les tuyères de voûte 9, 10, 11 soient des jets relativement "mous". L'expérience des inventeurs montre que leur profondeur de pénétration dans le bain de métal liquide 2 ne doit optimalement pas excéder 5 cm environ.

Cette profondeur peut être estimée au moyen de modélisations mathématiques. A titre d'exemple, on peut citer la méthode exposée dans l'article "A model study on jet penetration and sloping in the LD converter (Tetsu To Hagane 58 (1972) N°1, pp. 76-84)", selon laquelle la profondeur de pénétration dans l'acier liquide d'un jet d'oxygène issu d'une tuyère émergée à un trou s'exprime en mm par:

$$\text{Pénétration} = A\, e^{-0,78\, H / A \cos\beta}$$

avec:

$$A = 63\, (Q / d)^{2/3}$$

où:

- Q est le débit d'oxygène en $Nm^3/h$;
- d est le diamètre du trou de la tuyère en mm;
- H est la distance entre l'extrémité de la tuyère et la surface du bain d'acier liquide 2 en mm;
- $\beta$ est l'angle d'inclinaison de la tuyère par rapport à l'horizontale.

Les tuyères 9, 10, 11 peuvent également être

utilisées pour chalumer les matières ferrifères avant le début de leur fusion pour accélérer celle-ci. Leur nombre doit être suffisant pour obtenir une couverture aussi satisfaisante que possible de la surface du bain 2, selon les critères qui ont été précédemment exposés. Il est toutefois préférable que les jets gazeux 12, 13, 14 soient bien séparés les uns des autres, pour obtenir des conditions aérodynamiques bien maîtrisées à l'intérieur du four.

Comme on l'a dit, une injection d'oxygène dans le bain d'acier liquide 2 est parfois pratiquée à travers la sole de la cuve 1 par des tuyères de sole 20, pour favoriser la décarburation du métal. Une injection par ces mêmes tuyères de sole 20 de gaz non oxydant (azote, argon) a également un effet bénéfique sur la cinétique de décarburation, et aussi sur la vitesse de fusion des matières ferrifères encore solides 2' grâce au brassage du métal liquide 2 qu'elle provoque. Il est avantageux que les impacts 15, 16, 17 des jets d'oxygène 12, 13, 14 issus des tuyères de voûte 9, 10, 11 surplombent les sites d'implantation des tuyères de sole 20, car ces zones constituent des sites priviligiés de dégagement de CO. Mais dans ce cas, il est encore plus crucial de bien contrôler la profondeur de pénétration des jets d'oxygène 12, 13, 14 dans le bain 2, car l'injection de gaz par la sole génère elle-même des projections de gouttelettes de métal liquide 19, et il importe que l'oxygène provenant de la voûte n'augmente pas trop l'intensité de ces projections, pour les raisons qui ont été dites, qui tiennent à la nécessité de limiter la réduction du $CO_2$ déjà formé.

Par rapport à une implantation connue en paroi disposer les tuyères dans la voûte 3 conformément à l'invention présente des avantages qui contribuent à rendre optimale la pratique de la post-combustion. En premier lieu, par comparaison avec des tuyères implantées dans la paroi latérale et qui couvriraient les mêmes portions du bain, des tuyères de voûte 9, 10, 11 délivrent des jets présentant une plus faible inclinaison par rapport à la verticale. Cela diminue l'effet de mise en circulation, tangentiellement à la paroi, des gaz présents dans le four, qui provoque des usures localisées des réfractaires. Il est également plus aisé de régler les dimensions et les orientations des jets 12, 13, 14 de manière à ce qu'ils ne viennent pas percuter la paroi du four ou les électrodes 4, 5, 6. Un autre avantage est qu'avec un jet 12, 13, 14 faiblement incliné issu d'une tuyère de voûte 9, 10, 11, la zone d'impact du jet sur le métal en cours de fusion varie peu au fur et à mesure que les ferrailles fondent et que leur hauteur dans le four diminue. Un jet fortement incliné issu d'une tuyère de paroi serait beaucoup plus sensible à ces variations de hauteur, et on ne serait plus sûr que l'extrémité de la flamme issue de la tuyère est bien en contact permanent avec le métal Or, c'est cette extrémité qui est le point le plus chaud du jet, et son contact avec le métal 2 est une condition importante pour l'optimisation des transferts thermiques Cette optimisation est donc plus aisée avec des tuyères de voûte 9, 10, 11 qu'avec des tuyères de paroi. D'autre part, on diminue l'intensité des projections de laitier, car un jet proche de la verticale tend à repousser le laitier qu'il rencontre, plutôt qu'à le projeter en direction des parois du four L'usure des réfractaires revêtant le four est donc, également pour cette raison, plus faible avec des tuyères de voûte 9, 10, 11 qu'avec des tuyères de paroi. Enfin, et surtout, pour les mêmes raisons liées à la moindre inclinaison du jet d'oxygène par rapport à la verticale, les projections de métal issues de la zone d'impact du jet sur le métal liquide 2 sont elles aussi diminuées par l'implantation des tuyères dans la voûte 3 plutôt que dans la paroi latérale de la cuve 1 du four. Et on a vu que ces projections qui tendent à réduire le $CO_2$ déjà formé étaient très préjudiciables au bon déroulement de la post-combustion du CO.

On a intérêt à ce que, dans les couches supérieures de l'atmosphère du four, on trouve très majoritairement du $CO_2$, et à ce que la présence d'oxygène y soit circonscrite à des zones aussi limitées que possible en nombre et en étendue, cela pour éviter que de l'oxygène qui devrait servir à la post-combustion ne soit aspiré hors du four par l'installation de captation des gaz de combustion. De préférence, il faut donc que les jets d'oxygène ne soient pas très nombreux (trois, par exemple), et que les tuyères leur donnent une forme conique avec un angle d'ouverture assez important pour maximaliser la surface du bain couverte par leurs impacts.

En variante, au lieu d'oxygène pur, il est possible d'utiliser de l'air fortement préchauffé ou, de manière générale, un gaz oxygéné, l'essentiel étant qu'il procure une température de flamme élevée (de l'ordre de 2000°C) lors de la combustion du CO.

Avec le procédé selon l'invention, il est donc possible d'exploiter au mieux l'oxygène insufflé dans le four pour assurer la post-combustion du CO formé. Cela peut conduire, au choix de l'opérateur, par rapport aux pratiques antérieures, soit à raccourcir la durée de l'élaboration à ajouts d'énergie électrique, de carbone et d'oxygène constants, puisque les températures visées pour l'acier liquide sont atteintes plus rapidement, soit à diminuer l'apport d'énergie électrique et les quantités d'oxygène et de carbone introduites dans le four, en conservant la durée d'élaboration habituelle.

**Revendications**

1. Procédé d'élaboration de l'acier en cours de fusion dans un four électrique à arc du type comportant une cuve renfermant un bain d'acier en fusion, une voûte coiffant ladite cuve et une électrode de voûte unique ou une pluralité d'électrodes de voûte inscrites dans un cylindre, selon lequel on insuffle exclusivement d'un gaz oxygéné sous forme de jets gazeux dans ladite cuve en direction de la surface dudit bain, de manière à ce que les zones d'impact desdits jets sur ladite surface ne recouvrent pas ladite électrode ou ledit cylindre en recouvrant simultanément la plus grande fraction possible de la surface dudit bain, **caractérisé en ce que** lesdits jets sont insufflés à partir de la voûte du four, et **en ce qu'**ils ont une profondeur de pénétration dans ledit bain inférieure à 5 cm environ.

2. Procédé selon la revendication 1, **caractérisé en ce qu'**on insuffle un gaz neutre ou oxydant à travers la sole du four à l'aplomb des zones d'impact desdits jets sur ledit bain.

3. Procédé selon la des revendication 1 ou 2, **caractérisé en ce qu'**on maintient dans la partie supérieure du four une atmosphère majoritairement composée de $CO_2$.

4. Four électrique à arc d'aciérie, du type comportant une cuve (1) destinée à renfermer de l'acier liquide (2) et des matières ferrifères (2') en cours de fusion, une voûte (3) coiffant ladite cuve (1), une électrode de voûte unique ou une pluralité d'électrodes de voûte (4, 5, 6) inscrites dans un cylindre, et des moyens pour insuffler des jets (12, 13, 14) exclusivement d'un gaz oxygéné par tuyères dans ladite cuve (1) en direction de la surface dudit acier (2) lesdits moyens sont adaptés de façon que les zones d'impact desdits jets recouvrent la plus grande fraction possible de la surface du bain, et adaptés de façon que les zones d'impact desdits jets (12, 13, 14) sur ladite surface ne recouvrant pas ladite électrode ou ledit cylindre, **caractérisé en ce que** lesdits moyens sont constitués par des tuyères (9, 10, 11) implantées dans ladite voûte (3).

5. Four électrique à arc d'aciérie selon la revendication 4, **caractérisé en ce qu'**il comporte des moyens (20) pour insuffler un gaz neutre ou oxydant à travers la sole du four, lesdits moyens étant placés à l'aplomb des zones d'impact (15, 16, 17) desdits jets (12, 13, 14) sur l'acier liquide (2).

## Claims

1. Process for producing steel undergoing melting in an electric arc furnace of the type comprising a vessel containing a molten steel bath, a roof topping the said vessel and a single roof electrode or a plurality of roof electrodes inscribed within a cylinder, in which process an oxygenated gas is exclusively injected into the said vessel in the form of gas jets directed towards the surface of the said bath so that the areas of impact of the said jets on the said surface do not overlap with the said electrode or the said cylinder, while simultaneously covering the largest possible fraction of the surface of the said bath, **characterized in that** the said jets are injected from the roof of the furnace and **in that** they have a depth of penetration into the said bath of less than about 5 cm.

2. Process according to Claim 1, **characterized in that** an inert or oxidizing gas is injected through the floor of the furnace vertically below the areas of impact of the said jets on the said bath.

3. Process according to either of Claims 1 and 2, **characterized in that** an atmosphere predominantly composed of $CO_2$ is maintained in the upper portion of the furnace.

4. Steelmaking electric arc furnace, of the type comprising a vessel (1) intended to contain liquid steel (2) and ferriferous material (2') undergoing melting, a roof (3) topping the said vessel (1), a single roof electrode or a plurality of roof electrodes (4, 5, 6) inscribed within a cylinder, and means for injecting jets (12, 13, 14) exclusively of an oxygenated gas via nozzles into the said vessel (1) directed towards the surface of the said steel (2), the said means being designed so that the areas of impact of the said jets cover the largest possible fraction of the surface of the bath and designed so that the areas of impact of the said jets (12, 13, 14) on the said surface do not overlap with the said electrode or the said cylinder, **characterized in that** the said means consist of nozzles (9, 10, 11) fitted into the said roof (3).

5. Steelmaking electric arc furnace according to Claim 4, **characterized in that** it includes means (20) for injecting an inert or oxidizing gas through the floor of the furnace, the said means being placed vertically below the areas of impact (15, 16, 17) of the said jets (12, 13, 14) on the liquid steel (2).

## Patentansprüche

1. Verfahren zum Erzeugen von schmelzflüssigem Stahl in einem Elektro-Lichtbogenofen umfassend ein Gefäß, das ein Bad aus Stahlschmelze enthält, ein das Gefäß abdeckendes Gewölbe und eine einzelne Gewölbeelektrode oder eine Vielzahl an Gewölbeelektroden, die in einen Zylinder einbeschrieben sind, nach welchem ausschließlich ein sauerstoffhaltiges Gas in Form von Gasströmen in das Gefäß in Richtung auf die Oberfläche des Bads derart eingeblasen wird, dass die Bereiche, in denen die Ströme auf die Oberfläche auftreffen, die Elektrode oder den Zylinder nicht bedecken, während sie gleichzeitig den größtmöglichen Teil der Badoberfläche bedecken, **dadurch gekennzeichnet, dass** die Ströme vom Ofengewölbe aus eingeblasen werden und dass ihre Eindringtiefe in das Bad weniger als 5 cm beträgt.

**2.** Verfahren nach Anspruch 1, **dadurch gekennzeichnet, dass** ein neutrales oder oxidierendes Gas im Lot zu den Bereichen, in denen die Ströme auf das Bad auftreffen, durch die Ofensohle hindurch eingeblasen wird.

**3.** Verfahren nach einem der Ansprüche 1 oder 2, **dadurch gekennzeichnet, dass** im oberen Teil des Ofens eine Atmosphäre aufrechterhalten wird, die vorwiegend aus $CO_2$ besteht.

**4.** Elektro-Lichtbogenofen für Stahlwerke umfassend ein Gefäß (1), das flüssigen Stahl (2) und eisenhaltige, schmelzflüssige Stoffe (2') enthalten soll, ein das Gefäß (1) abdeckendes Gewölbe (3), eine einzelne Gewölbeelektrode oder eine Vielzahl an Gewölbeelektroden (4, 5, 6), die in einen Zylinder einbeschrieben sind, und Mittel zum Einblasen über Düsen von Strömen (12, 13, 14) eines ausschließlich sauerstoffhaltigen Gases in das Gefäß (1) in Richtung auf die Oberfläche des Stahls (2), wobei die Mittel derart ausgebildet sind, dass die Auftreffbereiche der Ströme den größtmöglichen Teil der Badoberfläche bedecken und die Bereiche, in denen die Ströme (12, 13, 14) auf die Oberfläche auftreffen, die Elektrode oder den Zylinder nicht bedekken, **dadurch gekennzeichnet, dass** die Mittel aus in das Gewölbe (3) eingebauten Düsen (9, 10, 11) bestehen.

**5.** Elektro-Lichtbogenofen für Stahlwerke nach Anspruch 4, **dadurch gekennzeichnet, dass** er Mittel (20) zum Einblasen eines neutralen oder oxidierenden Gases durch die Ofensohle hindurch aufweist, wobei diese Mittel im Lot zu den Bereichen (15, 16, 17) angeordnet sind, in denen die Ströme (12, 13, 14) auf den flüssigen Stahl (2) auftreffen.

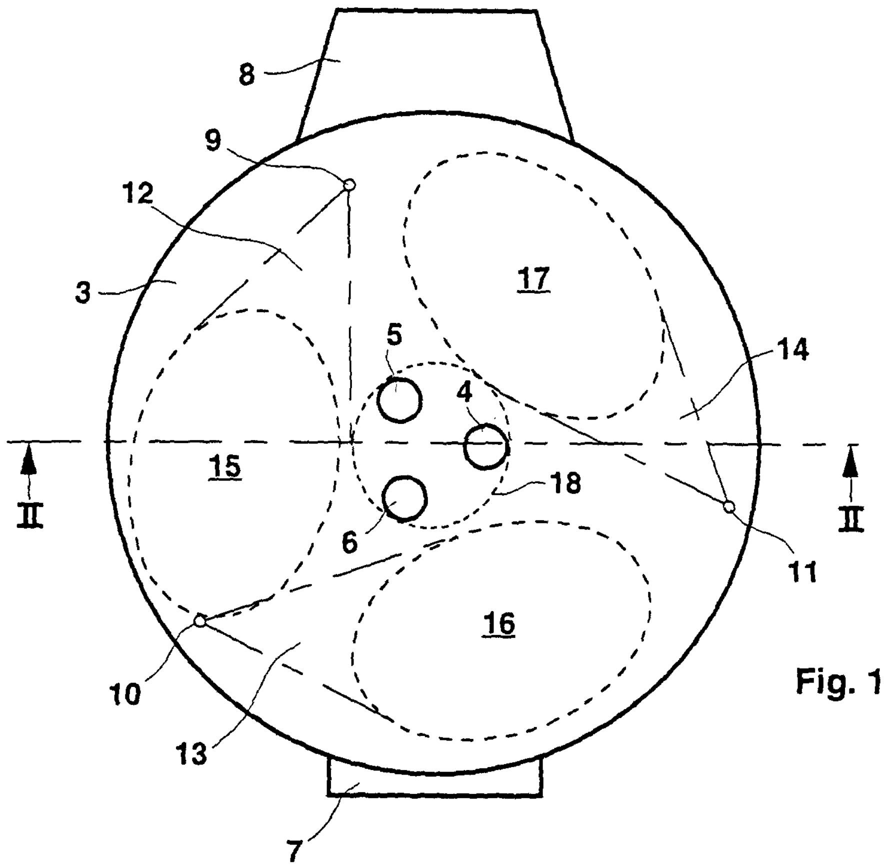

8
9
12
3
17
5
4
14
15
II
II
18
6
11
10
16
13
7


Fig. 1

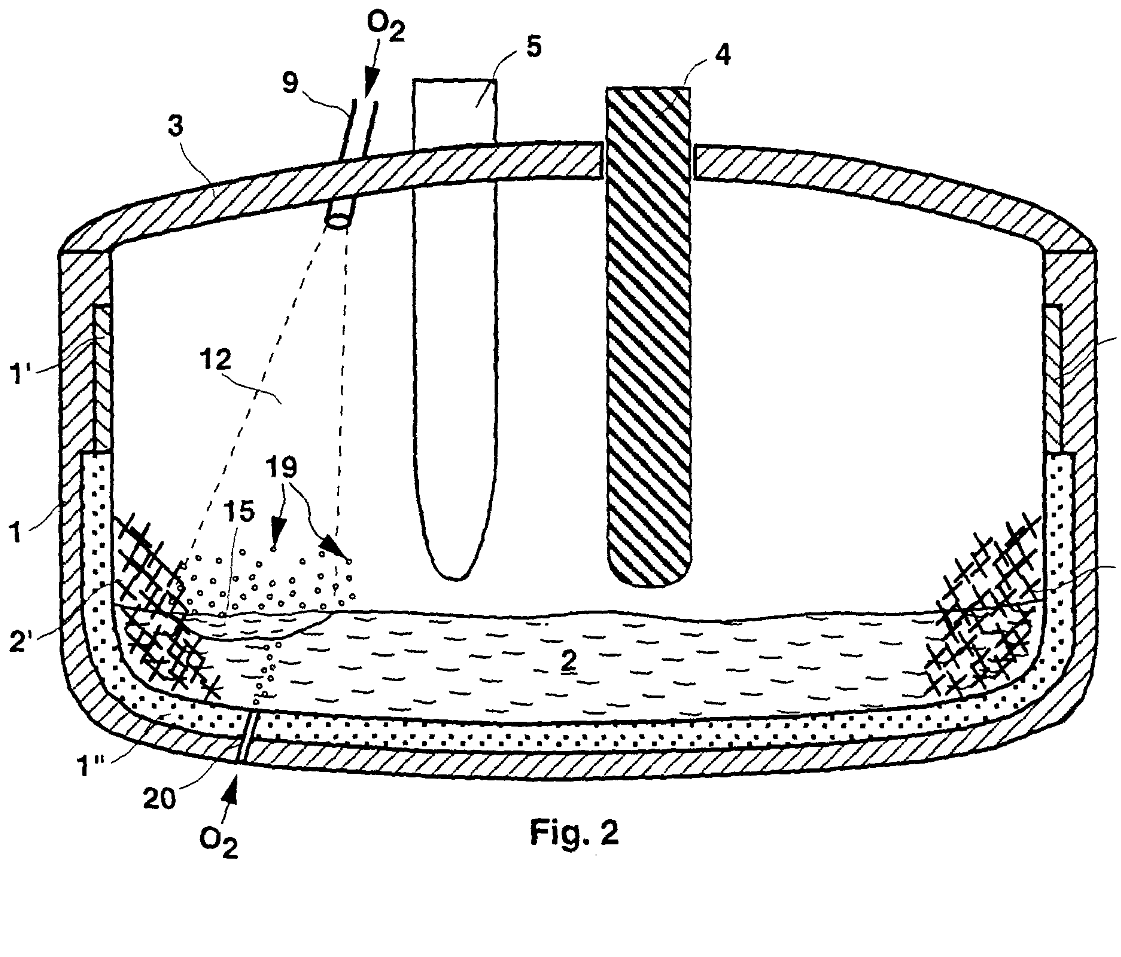

$O_2$
9
5
4
3
1'
1'
12
19
15
1
2'
2'
2
1"
20
$O_2$


Fig. 2